# FASCICULE DE BREVET EUROPEEN

(11) **EP 3 544 733 B1**
(45) Date de publication et mention de la délivrance du brevet: **04.08.2021**
(21) Numéro de dépôt: 17816909.0
(22) Date de dépôt: 22.11.2017
(51) Int. Cl.: B01J 47/10, B01D 15/02, C13B 20/14, B01J 49/05, B01D 15/18, B01D 15/20, B01D 15/36

(54) **PROCÉDÉ DE PURIFICATION UTILISANT UNE RÉSINE ÉCHANGEUSE D'IONS DE FAIBLE GRANULOMÉTRIE**
REINIGUNGSVERFAHREN UNTER VERWENDUNG EINES IONENAUSTAUSCHERHARZES MIT NIEDRIGER GRANULOMETRIE
PURIFICATION METHOD USING A LOW GRANULOMETRY ION EXCHANGE RESIN

(30) Priorité: 24.11.2016 FR 1661476
(43) Date de publication de la demande: 02.10.2019
(73) Titulaire: Novasep Process Solutions, 01700 Saint-Maurice-de-Beynost (FR)
(72) Inventeur: VALÉRY, Eric, 54425 Saulxures-lès-Nancy (FR); PRIEUR, Cédric, 69740 Genas (FR)
(74) Mandataire: Bandpay & Greuter
(86) Numéro de dépôt international: PCT/FR2017/053218
(87) Numéro de publication internationale: WO 2018/096272

(56) Documents cités:
- WO-A1-2005/001145
- GB-A- 1 066 231
- US-A- 2 563 006
- US-A- 3 730 770

## Description

### DOMAINE DE L'INVENTION

La présente invention concerne un procédé de purification d'une solution, et en particulier de décoloration d'un jus sucré, employant une résine échangeuse d'ions de faible granulométrie.

### ARRIERE-PLAN TECHNIQUE

L'industrie sucrière produit du jus sucré, ou liqueur sucrée, qui comporte des impuretés et notamment des colorants. Le jus sucré doit ainsi subir une purification, et notamment une décoloration.

Une méthode de décoloration classique consiste à faire passer le jus sucré sur un système chromatographique garni d'une résine échangeuse d'ions. La résine utilisée présente généralement une granulométrie avec une taille moyenne de particules de 700 µm environ, et elle permet d'atteindre un taux de décoloration d'environ 65 %, équivalent à une couleur fixée entre 15 et 18x10⁶ unités ICUMSA par litre de résine à une vitesse de percolation d'environ 10 m/h.

Des résines de plus faible granulométrie sont disponibles dans le commerce, par exemple la résine PRA420 de Purolite. De telles résines, généralement onéreuses et sensibles, sont réservées à la décoloration de jus faiblement colorés (entre 0 et 100 unités ICUMSA). Elles seraient difficiles à mettre en œuvre dans des systèmes chromatographiques traditionnels, du fait notamment des pressions de fonctionnement qui seraient nécessaires.

L'article *Powdered Resins : Continuous Ion Exchange,* de P.A.

Yarnell, dans Encyclopedia of Séparation Science (Elsevier Science Ltd., 2000) en p.3973-3981 décrit l'utilisation de broyats de résines, de faible granulométrie, pour former une fine pré-couche sur des filtres pour diverses applications dont la décoloration de jus sucrés. Après utilisation, le matériau est jeté. Cette technique implique donc une consommation importante de résine.

Le document JP S60-106540 décrit un procédé de décoloration de jus sucré par mise en contact avec une résine anionique. La résine est broyée jusqu'à une taille de particules inférieure à 250 µm. La mise en contact est effectuée en suspendant la résine dans le jus à traiter, et en agitant. Le document prévoit encore de régénérer la résine chargée en colorants pour pouvoir la réutiliser en la remettant en suspension dans une solution de régénération. Toutefois, les quantités de régénérant utilisées sont très importantes.

Le document GB 2221696 décrit un procédé de décoloration de jus sucré reposant sur l'utilisation de cristobalite, avec une étape de finition par mise en contact avec une résine échangeuse d'ions. L'exemple 6 du document mentionne une résine ayant une taille de particules inférieure à 50 µm, qui est mise en contact avec un jus prétraité par suspension et agitation. Les mêmes remarques s'appliquent que s'agissant des documents précédents.

Le document GB 1066231 décrit également un procédé de purification d'une solution, en particulier la décoloration d'un jus de sucre, comprenant successivement :
- la mise en contact d'une solution à purifier avec une résine échangeuse d'ions, par mise en suspension de la résine échangeuse d'ions dans la solution à purifier, la résine échangeuse d'ions étant sous forme de particules ayant une taille comprise entre 60 et 400 mesh (donc entre 250 µm et 37 µm) et préférablement comprise entre 100 et 400 mesh (donc entre 150 µm et 37 µm) ;
- la séparation d'une solution purifiée d'une part et d'une résine chargée d'autre part par le biais d'un filtre; - la régénération de la résine chargée.

Le document US 6,872,308 décrit l'utilisation d'une colonne de résine échangeuse d'ions, suivie d'un filtre comprenant une pré-couche de poudre de résine, dans le domaine du traitement des condensats.

Il existe un besoin de fournir un procédé de purification de solution, et notamment de décoloration de jus sucré, plus efficace que ceux de l'état de la technique, dans lequel la résine est régénérée sans une consommation excessive de solution de régénération.

### RESUME DE L'INVENTION

L'invention concerne en premier lieu un procédé de purification d'une solution tel que défini dans la revendication 1.

Selon l'invention, le procédé est un procédé de décoloration, la solution à purifier étant un jus sucré ; et le jus sucré présentant de manière plus particulièrement préférée une coloration supérieure ou égale à 100 unités ICUMSA, de préférence à 300 unités ICUMSA, de préférence à 400 unités ICUMSA et de manière particulièrement préférée à 500 unités ICUMSA.

Selon un mode de réalisation, le procédé comprend en outre, avant la régénération de la résine chargée :
- le lavage de la résine chargée, de préférence en faisant passer au moins une solution de lavage à travers un lit compact de résine chargée ;
   et comprend, de manière préférée, lors ou à l'issue du lavage :
- la séparation de la résine chargée et d'une fraction supplémentaire diluée de solution purifiée.

Selon un mode de réalisation, le procédé comprend en outre :
- le rinçage de la résine après la régénération, de préférence en faisant passer au moins une solution de rinçage à travers un lit compact de résine.

Selon un mode de réalisation, le procédé comprend en outre :
- le débâtissage du lit compact de résine après le lavage, ou la régénération, ou le rinçage, et de préférence après le rinçage ;
le débâtissage étant optionnellement effectué par un flux de solution à purifier.

Selon l'invention, la mise en suspension de la résine échangeuse d'ions dans la solution à purifier est effectuée dans une cuve agitée.

Selon un mode de réalisation, la séparation de la solution purifiée, la régénération de la résine chargée, et optionnellement le lavage et/ou le rinçage de la résine, sont effectués au moyen d'un ou plusieurs filtres, la résine étant retenue sous forme de lit compact sur ces filtres.

Selon un mode de réalisation, les filtres sont disposés en sortie d'un récipient qui est utilisé pour l'étape de mise en contact, et qui de préférence est la cuve agitée mentionnée ci-dessus ; ou les filtres sont disposés dans un dispositif de filtration distinct dudit récipient, et de préférence connecté à celui-ci, le dispositif de filtration distinct étant de préférence choisi parmi les dispositifs de filtres presses rotatifs, de filtres rotatifs sous vide et de filtres à bandes.

Selon un mode de réalisation, la résine échangeuse d'ions est sous forme de particules ayant une taille Dv50 inférieure ou égale à 150 µm, de préférence à 100 µm, de manière plus particulièrement préférée à 50 µm.

Selon un mode de réalisation, la dimension maximale du lit compact de résine chargée dans la direction selon laquelle la solution de régénération est faite passer est inférieure ou égale à 10 cm, de préférence inférieure ou égale à 5 cm, de manière plus particulièrement préférée inférieure ou égale à 2 cm.

Selon un mode de réalisation :
- la solution de régénération utilisée pour la régénération de la résine chargée est en partie issue d'une précédente régénération de résine chargée ; et/ou
- la solution de lavage utilisée pour le lavage de la résine chargée est en partie issue d'un précédent lavage de résine chargée, et/ou d'une précédente régénération de résine chargée ; et/ou
- la solution de rinçage utilisée pour le rinçage de la résine est en partie issue d'un précédent rinçage de résine.

Selon un mode de réalisation, le procédé est continu.

Selon un mode de réalisation, une pluralité de lots de résine chargée issus de plusieurs étapes distinctes de mise en contact sont rassemblés en un lot unique de résine chargée pour la mise en œuvre de l'étape de régénération, et le cas échéant de l'étape précédente de lavage et/ou de l'étape suivante de rinçage.

L'invention a également pour objet un ensemble pour la purification d'une solution à purifier tel que défini dans la revendication 13.

Selon un mode de réalisation, l'installation est en outre configurée pour rincer la résine après sa régénération, de préférence en faisant passer au moins une solution de rinçage à travers un lit compact de résine ; et/ou pour laver la résine avant sa régénération, de préférence en faisant passer au moins une solution de lavage à travers un lit compact de résine.

Selon un mode de réalisation, l'installation est en outre configurée pour effectuer le débâtissage du lit compact de résine après la régénération et éventuellement le rinçage.

Selon l'invention, le contenant est une cuve agitée.

Selon un mode de réalisation, le dispositif de séparation est configuré pour former un lit compact de résine sur un ou plusieurs filtres ; et, de préférence :
- les filtres sont disposés en sortie du contenant ; ou
- les filtres sont disposés dans un dispositif de filtration distinct du contenant et de préférence connecté à celui-ci, le dispositif de filtration étant de préférence un dispositif de filtre presse rotatif, de filtre rotatif sous vide ou de filtre à bande.

Selon un mode de réalisation, la résine échangeuse d'ions est sous forme de particules ayant une taille Dv50 inférieure ou égale à 150 µm, de préférence à 100 µm, de manière plus particulièrement préférée à 50 µm.

Selon un mode de réalisation, la dimension maximale du lit compact de résine chargée dans la direction selon laquelle la solution de régénération est faite passer est inférieure ou égale à 10 cm, de préférence inférieure ou égale à 5 cm, de manière plus particulièrement préférée inférieure ou égale à 2 cm.

La présente invention permet de surmonter les inconvénients de l'état de la technique. Elle fournit plus particulièrement un procédé de décoloration de jus sucré plus efficace que ceux de l'état de la technique, dans lequel la résine est régénérée sans une consommation excessive de solution de régénération. Le procédé est en particulier applicable à des jus sucrés présentant une coloration relativement élevée.

Selon un mode de réalisation, cela est accompli grâce notamment à la conjonction de trois caractéristiques :
(1) d'une part, l'utilisation d'une résine échangeuse d'ions de faible granulométrie ;
(2) d'autre part, la mise en œuvre de cette résine échangeuse d'ions sous forme d'une suspension lors de l'étape de mise en contact du jus sucré avec la résine ;
(3) enfin, la mise en œuvre de la résine sous forme de lit compact lors de l'étape de régénération de la résine.

La caractéristique (1) permet d'améliorer considérablement la capacité de la résine et la cinétique de capture des molécules colorées, par rapport à l'utilisation d'une résine conventionnelle de granulométrie plus élevée.

La caractéristique (2) permet d'éviter les inconvénients de l'utilisation d'une résine de faible granulométrie dans un système chromatographique classique tel qu'une colonne statique, à savoir une réduction de la vitesse de percolation et donc une diminution de la productivité, et/ou l'utilisation de systèmes à haute pression, complexes et onéreux.

La caractéristique (3) permet de limiter la quantité de solution de régénération consommée pour la régénération de la résine.

### BREVE DESCRIPTION DES FIGURES

Les **figures 1 à 4** représentent de manière schématique des successions d'étapes dans certains modes de réalisation du procédé de l'invention.
La **figure 5** représente de manière schématique une installation adaptée pour la mise en œuvre du procédé de l'invention, selon un mode de réalisation.
La **figure 6** représente de manière schématique une installation adaptée pour la mise en œuvre du procédé de l'invention, selon un autre mode de réalisation.
La **figure 7** représente de manière schématique une cuve agitée utilisée dans une installation adaptée pour la mise en œuvre du procédé de l'invention, selon un autre mode de réalisation.
La **figure 8** représente de manière schématique un dispositif de filtration utilisé dans une installation adaptée pour la mise en œuvre du procédé de l'invention, selon un autre mode de réalisation.
La **figure 9** illustre la cinétique de décoloration d'un jus sucré avec différentes granulométries de résine, comme décrit dans l'exemple 1 ci-dessous. Le pourcentage de décoloration par rapport au jus sucré initial figure en ordonnée, et la durée de la mise en contact en minutes figure en abscisse.
La **figure 10** illustre la cinétique de décoloration d'un jus sucré avec différentes granulométries de résine, comme décrit dans l'exemple 2 ci-dessous. Le pourcentage de décoloration par rapport au jus sucré initial figure en ordonnée, et la durée de la mise en contact en minutes figure en abscisse.
La **figure 11** illustre la cinétique de décoloration d'un jus sucré avec différentes granulométries de résine, comme décrit dans l'exemple 3 ci-dessous. Le pourcentage de décoloration par rapport au jus sucré initial figure en ordonnée, et le volume de charge passée à travers la résine figure en abscisse, en BV (équivalents de volume de lit résine).

### DESCRIPTION DE MODES DE REALISATION DE L'INVENTION

L'invention est maintenant décrite plus en détail et de façon non limitative dans la description qui suit.

L'invention vise à purifier une solution, c'est-à-dire réduire la teneur d'un ou plusieurs composés présents dans cette solution.

Les composés à purifier sont de préférence des molécules chargées en solution, et présentant une masse moléculaire supérieure ou égale à 500 Da, de préférence supérieure ou égale à 750 Da voire à 1 kDa.

De préférence, les composés à purifier sont des molécules comportant au moins un cycle aromatique ou un groupe chromophore, c'est-à-dire sont des molécules comportant une séquence de doubles liaisons conjuguées (alternance de doubles liaisons et de simples liaisons).

De préférence, les composés à purifier sont un ou plusieurs colorants, auquel cas le procédé de purification est un procédé de décoloration.

De préférence, la solution à purifier est un jus sucré.

Les composés à purifier peuvent inclure notamment des flavonoïdes, des mélanines, des carotènes, des chlorophylles, des xanthophylles, des mélanoïdines, des caramels, des HADP (produits de dégradation alcaline des hexoses), et des combinaisons de ceux-ci.

Dans ce qui suit, l'invention est décrite en faisant référence exclusivement au mode de réalisation préféré de la décoloration du jus sucré, pour plus de clarté. Toutefois, cette description s'applique de manière analogue à un autre type de purification de solution. La solution peut par exemple ne pas être un jus sucré. De plus, les composés à purifier peuvent être non seulement des colorants, mais également des enzymes ou des polymères par exemple.

Il est entendu que, selon les cas, les composés à purifier sont soit des impuretés à éliminer, soit des composés d'intérêt qu'il est utile de collecter et de concentrer pour les valoriser.

Comme évoqué ci-dessus, le procédé de l'invention consiste préférentiellement à décolorer un jus sucré. Par « *jus sucré* », on entend un flux liquide contenant des sucres et des impuretés, et notamment des molécules de colorants. Le jus sucré est avantageusement issu de l'industrie sucrière. Il peut avoir subi une ou plusieurs étapes de prétraitement telles que des étapes de centrifugation, filtration, carbonatation, flottation et/ou clarification.

Par « *décoloration* », on entend la réduction de la coloration du jus sucré, mesurée en unités ICUMSA. Les méthodes de détermination de la couleur sont issues des méthodes ICUMSA officielles adaptées aux sucres roux : GS1/3-7 (2011) et sucres blancs : GS2/3-10 (2011) - selon l'origine et la nature du jus sucré.

Avantageusement, le jus sucré auquel est appliqué le procédé de l'invention présente une coloration supérieure ou égale à 100 UI (unités ICUMSA), de préférence à 300 UI, de préférence à 400 UI et de manière particulièrement préférée à 500 UI.

Avantageusement encore, le jus sucré décoloré issu du procédé de l'invention présente une coloration inférieure ou égale à 1000 UI, de préférence inférieure ou égale à 400 UI, de préférence encore inférieure ou égale à 300 UI, plus particulièrement inférieure ou égale à 200 UI, et idéalement inférieure ou égale à 150 UI.

Avantageusement, le taux de décoloration du jus sucré (rapport entre la coloration du jus sucré décoloré et la coloration du jus sucré avant application du procédé de décoloration, les colorations étant mesurées en UI) est supérieur ou égal à 30 %, ou à 40 %, ou à 50 %, ou à 60 %, ou à 70 %.

Selon l'invention, la décoloration est effectuée en mettant en contact le jus sucré avec une résine échangeuse d'ions. De préférence, il s'agit d'une résine anionique forte, sous forme chlorure et hydroxyle avec un rapport chlorure / hydroxyle de préférence supérieur à 50 %, de préférence encore supérieur à 60 %, 70 %, 80 % ou 90%.

Alternativement, on peut utiliser une résine anionique faible, ou une résine cationique faible, ou une résine cationique forte, ou une résine adsorbante, ou leurs combinaisons, ou en mélange avec du charbon actif.

Toujours selon l'invention, la résine est sous forme de particules ayant une taille de particules Dv50 inférieure ou égale à 200 µm.

Le terme Dv50 désigne le 50^{ème} centile de la distribution de taille des particules, c'est-à-dire que 50 % des particules ont une taille (correspondant au diamètre des particules, lorsqu'elles sont sphériques) inférieure au Dv50 et 50 % ont une taille supérieure au Dv50. Il s'agit de la médiane de la distribution volumétrique des particules de résine.

La valeur du Dv50 est, selon l'invention, déterminée par granulométrie par diffraction laser.

Dans certains cas, les particules individuelles peuvent avoir une tendance à l'agrégation, auquel cas il convient de déterminer leur taille par microscopie électronique, puisque la taille apparente mesurée par granulométrie par diffraction laser est alors plus importante que la taille particulaire réelle.

De préférence, la résine est sous forme de particules ayant une taille Dv50 inférieure ou égale à 150 µm, ou à 100 µm, ou à 75 µm, ou à 50 µm, ou à 40 µm, ou à 30 µm, ou à 20 µm, ou à 10 µm.

Si l'on ne souhaite pas déterminer de manière très précise le Dv50, il est possible d'estimer une gamme de taille dans laquelle le Dv50 se situe, en procédant à un tamisage. Par exemple, si des particules passent majoritairement à travers un tamis à 100 µm d'ouverture, cela implique que le Dv50 des particules est inférieur à 100 µm. La méthode du tamisage permet également de sélectionner des particules dont le Dv50 est compris entre deux seuils (inférieur et supérieur).

Une résine de granulométrie appropriée peut être directement disponible dans le commerce, ou bien elle peut être obtenue à partir d'une résine du commerce de granulométrie supérieure, par broyage de la résine. Le broyage des billes de résine peut s'effectuer par cryogénie, action mécanique (vis sans fin), air pulsé ou toute autre méthode connue de l'homme de l'art. Elle peut également être ajustée par tamisage.

La mise en contact du jus sucré avec la résine permet une adsorption de molécules de colorants sur ladite résine.

Selon l'invention, la mise en contact du jus sucré avec la résine est effectuée par mise en suspension de la résine dans le jus sucré. En d'autres termes, la résine est dans un état non-compact.

Dans l'ensemble de la présente demande, l'état « *compact »* est défini comme étant un état dans lequel les particules sont en contact permanent ou quasi-permanent avec les particules voisines. De préférence, un lit de résine à l'état compact est un lit de résine qui contient, sans tenir compte du surnageant éventuel, moins de 2 volumes de liquide interstitiel pour 1 volume de lit de résine sec, de préférence encore, moins de 1,5 ou moins de 1 ou moins de 0,9 volume de liquide interstitiel pour 1 volume de lit de résine sec. Le « *lit de résine sec* » est obtenu par élimination du liquide interstitiel dans le lit de résine à l'état compact, par exemple par soufflage ou autre procédure équivalente de séchage.

De préférence, la fraction volumique occupée par des particules (à l'état non-compact) lors de l'étape de mise en contact avec le jus sucré (correspondant à la concentration de la résine de départ ou issue du fabriquant dans le jus sucré, exprimée en rapport volumique) est inférieure ou égale à 0,3, de préférence à 0,2, ou à 0,1, ou à 0,05, ou à 0,01, ou à 0,005.

La mise en suspension de la résine dans le jus sucré peut être effectuée en mélangeant la résine avec le jus sucré dans une cuve agitée. De préférence, la cuve est ainsi munie d'un ou plusieurs agitateurs, mais tout autre moyen approprié d'agitation connu de l'homme de l'art peut être utilisé, comme par exemple une recirculation externe ou tout autre flux de liquide. La cuve agitée peut être par exemple un réacteur à lit fluidisé.

La durée de cette étape de mise en contact peut être de 1 minute à 6 heures, de préférence de 10 minutes à 2 heures. La durée de cette étape de mise en contact peut être par exemple de 1 minute à 3 heures, de préférence de 10 minutes à 1 heure.

La température appliquée lors de l'étape de mise en contact du jus sucré avec la résine peut être de 10 à 95°C, de préférence de 20 à 85°C, de manière plus particulièrement préférée de 40 à 80°C, et plus préférentiellement de 50 à 70°C.

A l'issue de l'étape de mise en contact, la résine chargée (c'est-à-dire la résine comportant des colorants adsorbés) doit être séparée du jus sucré décoloré.

Cette séparation est avantageusement effectuée par filtration. Ainsi, le mélange du jus et de la résine est appliqué sur au moins un filtre, comme décrit plus en détail ci-dessous en relation avec les installations illustrées sur les figures. Alternativement, et de manière préférée, la séparation est réalisée sur un filtre presse rotatif, ou un filtre rotatif sous vide ou un filtre à bande.

Ces équipements ont l'avantage de pouvoir être alimentés depuis la partie de l'installation dans laquelle la mise en contact de la résine avec le jus sucré est effectuée. Ils peuvent réciproquement alimenter la partie de l'installation dans laquelle la mise en contact de la résine avec le jus sucré est effectuée, afin de réutiliser la résine. Afin de limiter la taille des dispositifs de filtration, ces équipements peuvent avantageusement fonctionner de manière continue. Afin de maximiser la flexibilité générale de l'installation, il est également possible de concevoir un fonctionnement discontinu, par exemple en accumulant la résine chargée en colorants sur un filtre avant de procéder aux étapes de lavages et régénération à une fréquence contrôlée par exemple par le temps ou par le volume de résine.

Plus précisément, les dispositifs de filtration ci-dessus peuvent avoir plusieurs compartiments, par exemple un pour effectuer la séparation, un pour effectuer le lavage, un pour effectuer la régénération et un pour effectuer le rinçage. Dans un dispositif de filtre à bande, l'avancée de la bande assure le passage de la résine d'un compartiment à l'autre ; dans un dispositif de filtre rotatif, un effet de rotation peut permettre d'assurer le passage de la résine d'un compartiment à l'autre, avec par exemple des injections de fluides différentes entre les compartiments.

Il est également recommandé de préfiltrer la résine, par exemple par filtration membranaire.

De manière générale, les particules de résine sont retenues sur le ou les filtres, et une fraction concentrée de jus sucré décoloré est collectée à travers le ou les filtres. Alternativement, d'autres méthodes de séparation liquide - solide peuvent être employées, comme la centrifugation ou la décantation.

A l'issue de cette séparation, la résine est généralement dans un état compact, et il reste généralement du jus sucré décoloré dans les espaces interstitiels entre les particules de résine. C'est pourquoi il est avantageux de réaliser une étape de lavage.

Dans l'étape de lavage, une solution de lavage, de préférence de l'eau, est ajoutée à la résine, puis séparée, avantageusement par filtration. La résine peut être remise en suspension dans la solution de lavage avant de procéder à la filtration. Alternativement, il est possible de faire passer directement la solution de lavage à travers le lit compact de résine, qui est par exemple retenu sur le ou les filtres.

Le jus sucré décoloré qui est récupéré après l'étape de séparation (avant lavage) constitue une fraction concentrée. Lors ou à l'issue de l'étape de lavage, il est possible de collecter également une fraction diluée de jus sucré décoloré.

La fraction diluée de jus sucré décoloré et la fraction concentrée de jus sucré décoloré peuvent être mélangées, ou traitées et valorisées séparément.

Dans certains cas, il est souhaitable d'utiliser deux ou plus de deux lavages successifs, les solutions de lavage pouvant être identiques ou différentes.

Les solutions de lavage peuvent elles-mêmes provenir en tout ou partie d'une étape de lavage précédente, par recyclage.

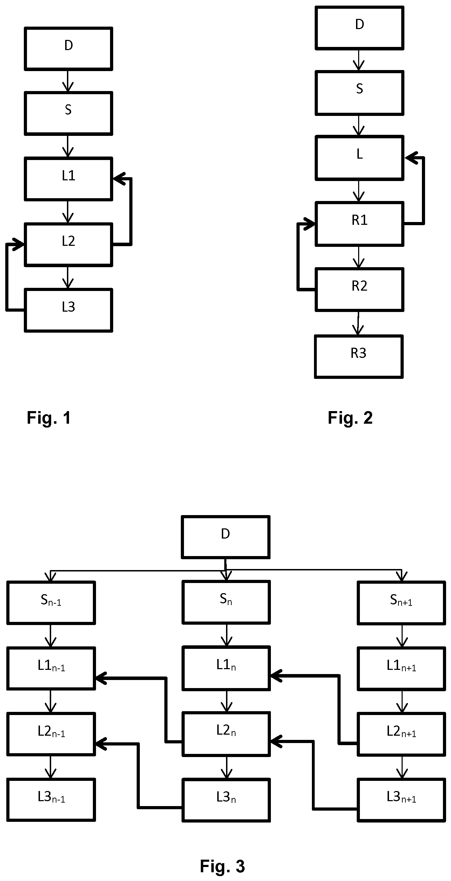

Par exemple, lorsqu'un même dispositif est utilisé lors de plusieurs cycles de séparation étalés dans le temps, chaque cycle comportant au moins deux lavages successifs, la solution de lavage récoltée à l'issue du deuxième lavage peut être utilisée pour effectuer le premier lavage lors du cycle suivant ; et plus généralement la solution de lavage récoltée à l'issue du N+1^{ème} lavage peut être utilisée pour effectuer le N^{ème} lavage lors du cycle suivant. Ce cas de figure est illustré de manière schématique à la **figure 1****,** où est représenté un enchaînement d'une étape de décoloration D, une étape de séparation S, puis trois lavages L1, L2 et L3 successifs. La solution de lavage récupérée à l'issue de lavage L2 est recyclée pour effectuer le lavage L1 au cycle suivant, et la solution de lavage récupérée à l'issue du lavage L3 est recyclée pour effectuer le lavage L2 au cycle suivant.

Alternativement, lorsque plusieurs dispositifs sont utilisés en parallèle, et qu'au moins deux lavages successifs sont prévus dans chaque dispositif, la solution de lavage récoltée dans un dispositif à l'issue du deuxième lavage peut être utilisée pour effectuer le premier lavage dans un autre dispositif ; et plus généralement la solution de lavage récoltée dans un dispositif à l'issue du N+1^{ème} lavage peut être utilisée pour effectuer le N^{ème} lavage dans un autre dispositif. Ce cas de figure est illustré de manière schématique à la **figure 3****,** où est représenté un enchaînement d'une étape de décoloration D, puis une étape de séparation S, puis trois lavages L1, L2 et L3 successifs, la séparation et les lavages étant effectués dans une pluralité de dispositifs disposés en parallèle (trois étant représentés ici, et désignés par des indices). La solution de lavage récupérée à l'issue de lavage L2ₙ (lavage L2 dans le dispositif n) est recyclée pour effectuer le lavage L1ₙ₋₁ (lavage L1 dans un autre dispositif n-1), et la solution de lavage récupérée à l'issue du lavage L3ₙ (lavage L3 dans le dispositif n) est recyclée pour effectuer le lavage L2ₙ₋₁ (lavage L2 dans un autre dispositif n-1).

A l'issue du ou des lavages, il reste généralement de la solution de lavage dans les espaces interstitiels entre les particules de résine. C'est pourquoi il est avantageux de réaliser une étape d'élimination de la solution résiduelle de lavage par tout moyen connu de l'homme de l'art, tel que l'aspiration au vide ou le soufflage par un flux de gaz tel que l'air ou l'azote.

L'invention prévoit ensuite une étape de régénération de la résine chargée.

Cette étape permet d'éliminer en tout ou partie les molécules de colorants adsorbées sur la résine, afin de permettre la réutilisation de celle-ci. Pour cela, la résine est mise en contact avec au moins une solution de régénération.

Dans certains cas, il est souhaitable d'utiliser deux ou plus de deux étapes de régénération successives, les solutions de régénération pouvant être identiques ou différentes.

Les solutions de régénération peuvent elles-mêmes provenir en tout ou partie d'une étape de régénération précédente, par recyclage. Alternativement ou en combinaison, une ou des solutions de lavage, telles que décrites précédemment, peuvent elles-mêmes provenir en tout ou partie d'une étape de régénération précédente, par recyclage.

Par exemple, lorsqu'un même dispositif est utilisé lors de plusieurs cycles de séparation étalés dans le temps, chaque cycle comportant au moins deux étapes successives de régénération, la solution de régénération récoltée à l'issue de la deuxième régénération peut être utilisée pour effectuer la première régénération lors du cycle suivant ; et plus généralement la solution de régénération récoltée à l'issue de la N+1^{ème} étape de régénération peut être utilisée pour effectuer la N^{ème} étape de régénération lors du cycle suivant. Ce cas de figure est illustré de manière schématique à la **figure 2****,** où est représenté un enchaînement d'une étape de décoloration D, une étape de séparation S, un ou plusieurs lavages L, puis trois étapes de régénération successives R1, R2 et R3. La solution de régénération récupérée à l'issue de l'étape de régénération R2 est recyclée pour effectuer l'étape de régénération R1 au cycle suivant, et la solution de régénération récupérée à l'issue de l'étape de régénération R3 est recyclée pour effectuer l'étape de régénération R2 au cycle suivant. En outre, la solution de régénération récupérée à l'issue de l'étape de régénération R1 est recyclée pour effectuer le lavage L.

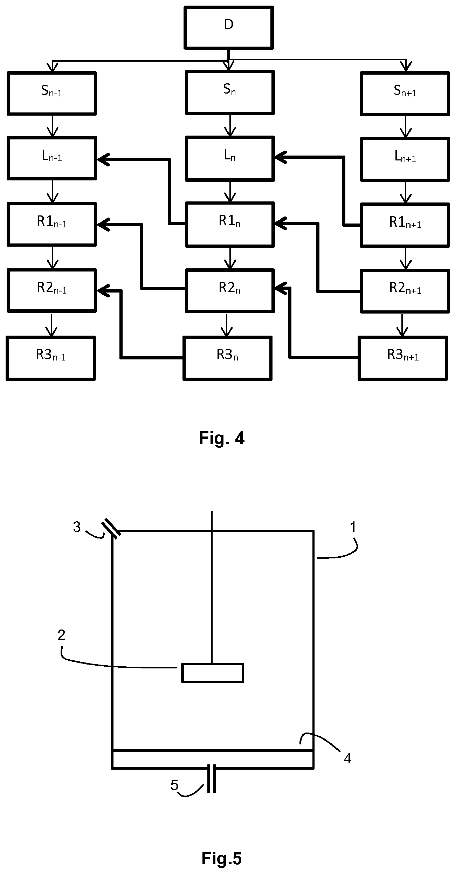

Alternativement, lorsque plusieurs dispositifs sont utilisés en parallèle, et qu'au moins deux étapes successives de régénération sont prévues dans chaque dispositif, la solution de régénération récoltée dans un dispositif à l'issue de la deuxième étape de régénération peut être utilisée pour effectuer la première étape de régénération dans un autre dispositif ; et plus généralement la solution de régénération récoltée dans un dispositif à l'issue de la N+1^{ème} étape de régénération peut être utilisée pour effectuer la N^{ème} étape de régénération dans un autre dispositif. Ce cas de figure est illustré de manière schématique à la **figure 4****,** où est représenté un enchaînement d'une étape de décoloration D, puis une étape de séparation S, puis un ou plusieurs lavages L successifs, et trois étapes de régénération successives R1, R2, R3. La séparation, le lavage et la régénération sont effectués dans une pluralité de dispositifs disposés en parallèle (trois étant représentés ici, et désignés par des indices). La solution de régénération récupérée à l'issue de l'étape de régénération R2ₙ (régénération R2 dans le dispositif n) est recyclée pour effectuer l'étape de régénération R1ₙ₋₁ (régénération R1 dans un autre dispositif n-1), et la solution de régénération récupérée à l'issue de l'étape de régénération R3ₙ (régénération R3 dans le dispositif n) est recyclée pour effectuer l'étape de régénération R2ₙ₋₁ (régénération R2 dans un autre dispositif n-1). Enfin, la solution de régénération récupérée à l'issue de l'étape de régénération R1ₙ (régénération R1 dans le dispositif n) est recyclée pour effectuer l'étape de lavage Lₙ₋₁ (lavage dans un autre dispositif n-1).

La ou les solutions de régénération peuvent être des solutions aqueuses basiques, acides et/ou salines, ou encore des solvants organiques ou des mélanges hydro-organiques, éventuellement basiques et/ou salins.

De préférence on utilise une solution aqueuse de chlorure de sodium basique, ou saumure basique. De manière plus particulièrement préférée, il s'agit de l'unique solution de régénération utilisée. La quantité de NaCl (exprimé en poids sec) préférentiellement utilisée est de 90 à 270 g par litre de résine, de préférence 120 à 230 g par litre de résine ; et la quantité de NaOH (exprimée en poids sec) préférentiellement utilisée est de 9 à 27 g par litre de résine, de préférence de 12 à 23 g par litre de résine.

L'invention prévoit que la régénération de la résine est effectuée en faisant passer la (ou chaque) solution de régénération à travers un lit compact de résine, c'est-à-dire un volume de résine à l'état compact.

De préférence, la résine est retenue sur un filtre ou des filtres, sur lequel elle forme un lit compact, et la solution de régénération passe à travers le lit de particules et le filtre ou les filtres.

La quantité totale de solution(s) de régénération utilisée est de préférence 0,5 à 4 fois le volume de résine, et plus particulièrement de 1 à 3 fois le volume de résine, de préférence 1 à 2 fois le volume de résine.

De préférence, le rapport volumique de la quantité de jus sucré soumis à la décoloration sur la quantité de solution(s) de régénération consommée est supérieur ou égal à 10, de manière plus particulière à 20, ou à 30, ou à 40, ou à 50.

A l'issue de l'étape de régénération, il reste généralement de la solution de régénération dans les espaces interstitiels entre les particules de résine. C'est pourquoi il est avantageux de réaliser ensuite une étape de rinçage et/ou de soufflage par un flux de gaz (tel que l'air ou l'azote) et/ou d'aspiration au vide afin d'éliminer cette solution de régénération résiduelle. Un soufflage ou une aspiration sont avantageusement effectués après un rinçage.

Dans l'étape de rinçage, une solution de rinçage, de préférence de l'eau, est ajoutée à la résine, puis séparée, avantageusement par filtration. La résine peut être remise en suspension dans la solution de rinçage avant de procéder à la filtration. Alternativement, il est possible de faire passer directement la solution de rinçage à travers le lit compact de résine retenu sur le ou les filtres.

Avant de réutiliser la résine pour l'étape de mise en contact avec le jus sucré, et donc afin de la remettre en suspension, il est nécessaire de procéder au débâtissage du lit compact de résine après l'étape de régénération (et éventuellement le soufflage et/ou rinçage et/ou aspiration).

Le débâtissage peut être effectué notamment en injectant un liquide (de préférence le jus sucré lui-même) à travers le ou les filtres, en sens inverse de celui utilisé pour la filtration ; ou bien en procédant à une injection latérale de liquide ; ou encore plus simplement par une action mécanique de raclage ou de vibration.

De préférence, la résine est remise en suspension, et un débâtissage est effectué, entre l'étape de rinçage suivant la régénération et l'étape suivante de décoloration. Une remise en suspension, avec débâtissage de la résine, peut également être effectuée pendant ou entre les étapes de lavage, rinçage et régénération.

De préférence, on utilise un ou plusieurs filtres de préférence identiques pour mettre en œuvre les étapes de séparation du jus sucré décoloré et de la résine, de lavage éventuel, de régénération et optionnellement de rinçage, la résine étant alors présente sous la forme d'un lit compact sur le ou les filtres.

De préférence, la hauteur du lit compact de résine, c'est-à-dire la dimension maximale du lit dans une direction perpendiculaire à la surface du filtre (ou de chaque filtre), est inférieure ou égale à 10 cm, de préférence inférieure ou égale à 5 cm, de manière plus particulièrement préférée inférieure ou égale à 2 cm. Une faible hauteur de lit permet de limiter la pression nécessaire pour faire passer différents liquides à travers le lit.

En faisant référence à la **figure 5****,** selon un mode de réalisation, une installation adaptée à la mise en œuvre du procédé de l'invention comprend :
- une cuve 1 ;
- un ou plusieurs agitateurs 2 ;
- au moins une conduite d'alimentation 3, par exemple à (ou proche de) une extrémité supérieure de la cuve 1 ;
- un filtre 4 ;
- au moins une conduite de prélèvement 5, par exemple à (ou proche de) une extrémité inférieure de la cuve 1.

Le jus sucré peut être introduit dans la cuve 1 lors de son premier chargement soit par une conduite d'alimentation 3, soit par une conduite de prélèvement 5. La résine peut être initialement introduite lors de son premier chargement dans la cuve 1 par un chargement manuel ou bien par une conduite d'alimentation 3. Le ou les agitateurs 2 permettent de maintenir la résine en suspension lors de l'étape de mise en contact, pendant la durée nécessaire pour obtenir le taux de décoloration souhaité.

Ensuite, on peut collecter le jus sucré décoloré par une conduite de prélèvement 5, en ouvrant une vanne appropriée. La résine est retenue sous forme de lit compact sur le filtre 4. La hauteur du lit de résine peut varier avec le temps. Le jus sucré décoloré peut être forcé à travers le lit compact soit en mettant la cuve 1 sous pression (ainsi, une conduite d'alimentation 3 peut être une conduite d'amenée de gaz, notamment d'air, sous pression) ; soit en dépressurisant une conduite de prélèvement 5. Il est possible de prévoir dans un premier temps une recirculation du jus sucré décoloré afin de constituer le lit compact de résine, et permettre une clarification du jus sucré.

Les étapes de lavage, régénération et rinçage peuvent être effectuées de la même manière, en injectant les différentes solutions appropriées soit par une conduite d'alimentation 3, soit de préférence par des buses réparties au-dessus de la surface supérieure du lit de résine.

L'étape de débâtissage est de préférence effectuée en injectant le jus sucré dans la cuve 1 par une conduite de prélèvement 5, il est également possible de considérer une action mécanique par exemple en utilisant un système de raclage par vis sans fin.

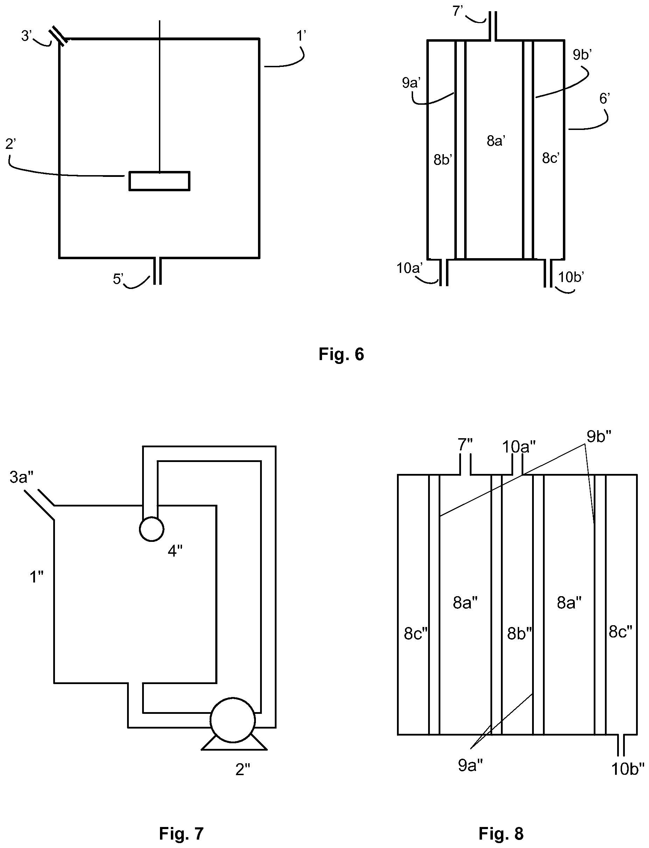

En faisant référence à la **figure 6****,** selon un autre mode de réalisation, une installation adaptée à la mise en œuvre du procédé de l'invention comprend :
- une cuve 1' pourvue d'un ou plusieurs agitateurs 2' ;
- au moins une conduite d'alimentation 3' connectée à la cuve 1', par exemple à (ou proche de) une extrémité supérieure de la cuve 1' ;
- au moins une conduite de prélèvement 5' connectée à la cuve 1', par exemple à (ou proche de) une extrémité inférieure de la cuve 1' ;
- un dispositif de filtration 6' séparé de la cuve 1', comprenant un premier compartiment 8a' (dans l'exemple illustré, en position centrale), un deuxième compartiment 8b' et un troisième compartiment 8c' (dans l'exemple illustré, de part et d'autre du premier compartiment 8a'), avec un premier filtre 9a' entre le premier compartiment 8a' et le deuxième compartiment 8b', et un deuxième filtre 9b' entre le premier compartiment 8a' et le troisième compartiment 8c' ;
- au moins une conduite d'alimentation 7' connectée au dispositif de filtration 6', et plus précisément au premier compartiment 8a' ;
- au moins une première conduite de prélèvement 10a' et une deuxième conduite de prélèvement 10b' connectées au dispositif de filtration 6', et plus précisément au deuxième compartiment 8b' et au troisième compartiment 8c' respectivement.

L'étape de mise en contact du jus sucré avec la résine est mise en œuvre dans la cuve 1', la résine étant maintenue en suspension dans le jus sucré au moyen du ou des agitateurs 2', pendant la durée nécessaire pour obtenir le taux de décoloration souhaité.

Ensuite, l'ensemble du jus et de la résine est prélevé par la conduite de prélèvement 5', et transféré vers le dispositif de filtration 6', et plus précisément le premier compartiment 8a' de celui-ci. Avantageusement, la conduite de prélèvement 5' peut être directement connectée à la conduite d'alimentation 7' du dispositif de filtration 6', une pompe pouvant être prévue pour permettre le transfert de matériau de la cuve 1' au dispositif de filtration 6'.

Une fois que le mélange du jus sucré décoloré et de la résine sont dans le premier compartiment 8a', on peut procéder à la séparation en appliquant une pression dans la conduite d'alimentation 7' du dispositif de filtration 6' ou une dépression dans l'une ou l'autre des conduites de prélèvement 10a' et 10b' connectées au dispositif de filtration 6', ou les deux. Ainsi, le jus sucré décoloré est collecté par l'une ou l'autre des conduites de prélèvement 10a' et 10b' connectées au dispositif de filtration 6', ou les deux, tandis que la résine est retenue sur l'un ou l'autre du premier filtre 9a' et deuxième filtre 9b' (ou les deux) sous la forme d'un lit compact. Avantageusement, le jus sucré décoloré est collecté par les deux conduites, et le volume de résine est tel que le lit compact de résine occupe la totalité ou quasi-totalité de l'espace entre le premier filtre 9a' et le deuxième filtre 9b'.

Ensuite, les étapes de lavage, de régénération et de rinçage peuvent être effectuées en injectant respectivement des solutions de lavage, de régénération et de rinçage dans le deuxième compartiment 8b' par la première conduite de prélèvement 10a' du dispositif de filtration 6', de sorte à faire passer les solutions respectives à travers le premier filtre 9a', dans le premier compartiment 8a', puis à travers le deuxième filtre 9b' et dans le troisième compartiment 8c', les solutions étant collectées par la deuxième conduite de prélèvement 10b' du dispositif de filtration 6'. La résine est encore à ce stade sous forme de lit compact entre le premier filtre 9a' et le deuxième filtre 9b'.

Bien entendu, la circulation des fluides peut alternativement être effectuée en sens inverse, depuis la deuxième conduite de prélèvement 10b' du dispositif de filtration 6' vers la première conduite de prélèvement 10a' du dispositif de filtration 6'.

Le débâtissage de la résine peut être effectué par exemple en injectant un liquide, de préférence du jus sucré à traiter, de préférence par la première conduite de prélèvement 10a' du dispositif de filtration 6' ou par la deuxième conduite de prélèvement 10b' du dispositif de filtration 6' ou de préférence encore par les deux. L'injection peut également être effectuée en complément par un ou des points d'injection situés entre le premier filtre 9a' et le deuxième filtre 9b'.

Ainsi, la résine peut être remise en suspension dans le jus sucré à décolorer et transférée à nouveau vers la cuve 1' par une conduite d'alimentation 3' ou de prélèvement 5'.

A titre d'alternative, il est possible d'utiliser un dispositif de filtration 6' comportant un seul filtre au lieu de deux.

En faisant référence à la **figure 7****,** selon un autre mode de réalisation, l'installation peut comprendre une cuve 1" (à la place de la cuve décrite ci-dessus), munie d'une conduite d'alimentation 3a" et d'une conduite de recirculation 2" pourvue d'une pompe, assurant une agitation du milieu dans la cuve 1". Une boule d'aspersion 4" peut être prévue pour l'arrivée de fluide dans la cuve 1" en provenance de la conduite de recirculation 2", afin d'homogénéiser le milieu. La boule d'aspersion 4" peut par exemple être rotative. Une conduite de prélèvement, non représentée, est également présente. Il peut par exemple s'agir d'une branche de la conduite de recirculation 2" de telle sorte que la même pompe peut être utilisée pour l'agitation du milieu dans la cuve et pour le prélèvement du jus sucré et de la résine.

En faisant référence à la **figure 8****,** selon un autre mode de réalisation, l'installation peut comprendre un dispositif de filtration de type cylindrique comprenant un premier compartiment 8a" en périphérie d'un deuxième compartiment 8b", et un troisième compartiment 8c" en périphérie du premier compartiment 8a". Un premier filtre 9a" est disposé entre le premier compartiment 8a" et le deuxième compartiment 8b", et un deuxième filtre 9b" est disposé entre le premier compartiment 8a" et le troisième compartiment 8c".

Une conduite d'alimentation 7" est connectée au dispositif de filtration au premier compartiment 8a", et au moins une première conduite de prélèvement 10a" et une deuxième conduite de prélèvement 10b" sont connectées au deuxième compartiment 8b" et au troisième compartiment 8c" respectivement.

Le fonctionnement de ce dispositif de filtration peut être analogue à celui décrit en référence à la **figure 6****.**

La cuve de la **figure 6** peut être associée au dispositif de filtration de la **figure 6** ou à celui de la **figure 8****.** Alternativement, la cuve de la **figure 7** peut être associée au dispositif de filtration de la **figure 6** ou à celui de la **figure 8****.**

Alternativement, on peut utiliser un dispositif de filtration tel qu'un filtre presse rotatif (par exemple ceux de la gamme RPF de la société BHS Sonthofen), un filtre rotatif sous vide ou un filtre à bande (par exemple ceux de la gamme BF de la société BHS Sonthofen).

### EXEMPLES

Les exemples suivants illustrent l'invention sans la limiter. Dans l'ensemble des exemples, la caractérisation du Dv50 des particules a été faite par tamisage.

### Exemple 1

Dans cet exemple, on utilise une charge de 100 BV (ou équivalents de volume de lit de résine) constituée d'un jus sucré à 60 % de matières sèches, avec une coloration de 545 unités ICUMSA. La résine utilisée est une résine anionique forte sous forme chlorure (FPA90RF Cl de Dow Chemical Company).

Dans un essai n°1, la résine brute, de porosité comprise entre 500 et 800 µm, est mise en contact avec le jus sucré dans un bécher de 400 mL, thermostaté à 60°C et agité à l'aide d'un barreau aimanté.

Dans un essai n°2, la résine est préalablement broyée jusqu'à une taille de particules de 100 à 500 µm. La mise en contact avec le jus sucré est effectuée de la même manière que dans l'essai n°1.

Dans un essai n°3, la résine est préalablement broyée jusqu'à une taille de particules de 80 à 100 µm. La mise en contact avec le jus sucré est effectuée de la même manière que dans l'essai n°1.

Dans un essai n°4, la résine est préalablement broyée jusqu'à une taille de particules de 35 à 80 µm. La mise en contact avec le jus sucré est effectuée de la même manière que dans l'essai n°1.

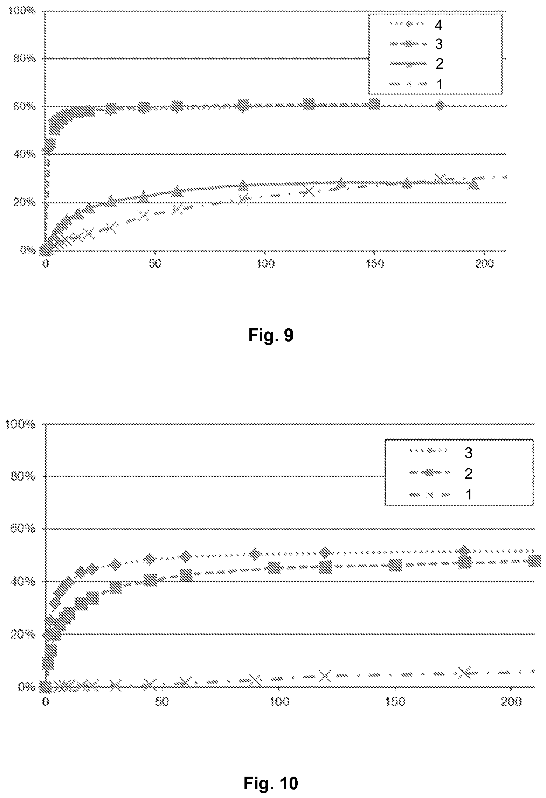

L'évolution de la coloration du jus sucré est mesurée en prélevant des échantillons au cours du temps. Les résultats sont représentés sur la **figure 9****,** chaque courbe correspondant à l'un des essais ci-dessus comme indiqué dans l'encadré.

Au vu de ces résultats, on peut déduire que le procédé de décoloration du jus sucré repose sur une adsorption de surface des molécules sucrées sur la résine. La réduction de la granulométrie de la résine augmente la surface accessible et offre ainsi une capacité plus grande ainsi qu'une cinétique plus rapide.

### Exemple 2

Dans cet exemple, on utilise une charge plus importante que dans l'exemple 1, à 300 BV, constituée d'un jus sucré à 60 % de matières sèches avec une coloration de 545 unités ICUMSA. La résine utilisée est la résine FPA90RF Cl comme dans l'exemple 1.

Dans un essai n°1, la résine brute, de porosité comprise entre 500 et 800 µm, est mise en contact avec le jus sucré dans un bécher de 400 mL, thermostaté à 60°C et agité à l'aide d'un barreau aimanté.

Dans un essai n°2, la résine est préalablement broyée jusqu'à une taille de particules de 80 à 100 µm. La mise en contact avec le jus sucré est effectuée de la même manière que dans l'essai n°1.

Dans un essai n°3, la résine est préalablement broyée jusqu'à une taille de particules de 35 à 80 µm. La mise en contact avec le jus sucré est effectuée de la même manière que dans l'essai n°1.

L'évolution de la coloration du jus sucré est mesurée en prélevant des échantillons au cours du temps. Les résultats sont représentés sur la **figure 10****,** chaque courbe correspondant à l'un des essais ci-dessus comme indiqué dans l'encadré.

Au vu de ces résultats, il est possible de décolorer à hauteur de 50 % environ 300 BV de charge avec une résine de faible granulométrie, au lieu de moins de 10 % avec une résine de granulométrie conventionnelle.

Ces résultats confirment que le procédé de décoloration correspond à un mécanisme d'adsorption de surface. La réduction de la granulométrie augmente la surface accessible et offre ainsi une capacité plus grande ainsi qu'une cinétique plus rapide.

Ainsi, la décoloration d'un jus sucré en réacteur agité est performante et rapide.

### Exemple 3

Dans cet exemple, des essais sont réalisés sur une colonne de chromatographie.

On utilise pour cela une colonne de 1 cm de diamètre et de 4 cm de hauteur - soit un volume de résine de 3,14 mL. L'étape d'adsorption est réalisée en faisant traverser le lit de résine par un volume de 180 BV de solution sucrée colorée (essai n°1). La résine utilisée est la résine de l'exemple 1, broyée jusqu'à une taille de particules de 80-100 µm.

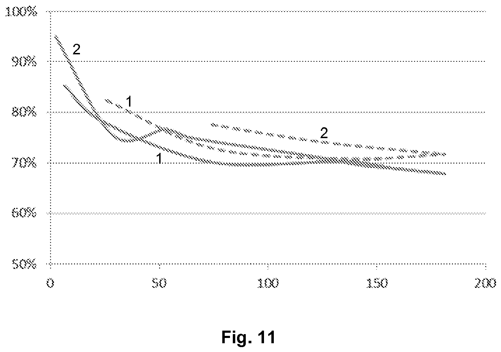

La coloration du jus sucré décoloré est mesurée en sortie de colonne. Les résultats sont représentés sur la **figure 11****,** la courbe n°1 en trait plein représentant le taux de décoloration instantané, et la courbe n°1 en pointillés représentant le taux de décoloration moyen.

Suite à l'étape d'adsorption, on effectue une étape de lavage en faisant passer un volume d'eau de 2 BV ; puis on effectue une étape de régénération en faisant passer un volume de solution de régénération (NaCl 10% + NaOH 1%) de 1,8 BV ; et on effectue une étape de rinçage à l'eau déminéralisée de 5 BV. Chaque étape dure entre 40 et 90 minutes.

On effectue ensuite une autre adsorption dans les mêmes conditions que la première (essai n°2). La coloration du jus sucré décoloré est à nouveau mesurée en sortie de colonne, et les résultats représentés sur la **figure 11****,** la courbe n°2 en trait plein représentant le taux de décoloration instantané, et la courbe n°2 en pointillés représentant le taux de décoloration moyen.

On constate que les performances des deux adsorptions sont similaires, ce qui démontre que, même avec une forte saturation de colorants adsorbés, la résine de faible granulométrie se régénère parfaitement.

En revanche, on a constaté que la perte de charge générée peut dépasser 10 bars à 0,5 m/h pour un sucre à 60 % de matière sèche, ce qui impose une vitesse de percolation faible et malheureusement augmente grandement la durée de l'étape d'adsorption. C'est pourquoi l'invention prévoit de réaliser l'étape d'adsorption avec une suspension de résine dans le jus sucré, comme dans les exemples 1 et 2.

Le tableau suivant fournit une comparaison des performances de l'adsorption selon l'exemple 3 avec celles d'une adsorption effectuée dans une installation industrielle classique.

| | **Installation industrielle classique** | **Exemple 3** |
|---|---|---|
| Taille moyenne (Dv50) de particules de résine | 700 µm | 80-100 µm |
| Volume de jus sucré | 52 BV | 180 BV |
| Coloration du jus sucré en entrée | 500 unités ICUMSA | 530 unités ICUMSA |
| Coloration du jus sucré en sortie | 175 unités ICUMSA | 150 unités ICUMSA |
| Taux de matière sèche soluble dans le jus sucré | 65° Brix | 60° Brix |
| Couleur fixée | 14,555 x 10⁶ unités | 52,942 x 10⁶ unités |
| | ICUMSA / L résine | ICUMSA / L résine |
| Matière de régénération consommée par rapport au volume de résine | 180 g NaCl à 100 % + 18 g NaOH à 100% par L de résine | 180 g NaCl à 100 % + 18 g NaOH à 1 00% par L de résine |
| Matière de régénération consommée par rapport à la coloration éliminée | 12,37 g NaCl à 100 % pour 1 000 000 unités | 3,40 g NaCl à 100 % pour 1 000 000 unités |
| | ICUMSA + 1,24 g NaOH 100% | ICUMSA + 0,34 g NaOH 100% |

## Revendications

1. Procédé de purification d'une solution, comprenant successivement :
- la mise en contact d'une solution à purifier avec une résine échangeuse d'ions, par mise en suspension de la résine échangeuse d'ions dans la solution à purifier, dans une cuve agitée, pendant une durée nécessaire pour obtenir un taux de décoloration souhaité, la résine échangeuse d'ions étant sous forme de particules ayant une taille Dv50 inférieure ou égale à 200 µm, la taille Dv50 étant déterminée par granulométrie par diffraction laser et ;
- le transfert de l'ensemble de la solution et de la résine dans un dispositif de filtration ;
- la séparation d'une solution purifiée d'une part et d'une résine chargée d'autre part une fois que le mélange de la solution et de la résine sont dans le dispositif de filtration ;
- la régénération de la résine chargée, en faisant passer au moins une solution de régénération à travers un lit compact de résine chargée,
le procédé étant un procédé de décoloration, et la solution à purifier étant un jus sucré.

2. Procédé selon la revendication 1, **caractérisé en ce que** le jus sucré présente une coloration supérieure ou égale à 100 unités ICUMSA, de préférence à 300 unités ICUMSA, de préférence à 400 unités ICUMSA et de manière particulièrement préférée à 500 unités ICUMSA.

3. Procédé selon l'une des revendications 1 à 2, comprenant en outre, avant la régénération de la résine chargée :
- le lavage de la résine chargée, de préférence en faisant passer au moins une solution de lavage à travers un lit compact de résine chargée ;
et comprenant, de manière préférée, lors ou à l'issue du lavage :
- la séparation de la résine chargée et d'une fraction supplémentaire diluée de solution purifiée.

4. Procédé selon l'une des revendications 1 à 3, comprenant en outre :
- le rinçage de la résine après la régénération, de préférence en faisant passer au moins une solution de rinçage à travers un lit compact de résine.

5. Procédé selon l'une des revendications 1 à 4, comprenant en outre :
- le débâtissage du lit compact de résine après le lavage, ou la régénération, ou le rinçage, et de préférence après le rinçage ;
le débâtissage étant optionnellement effectué par un flux de solution à purifier.

6. Procédé selon l'une des revendications 1 à 5, dans lequel la séparation de la solution purifiée, la régénération de la résine chargée, et optionnellement le lavage et/ou le rinçage de la résine, sont effectués au moyen d'un ou plusieurs filtres, la résine étant retenue sous forme de lit compact sur ces filtres.

7. Procédé selon la revendication 6, dans lequel les filtres sont disposés en sortie d'un récipient qui est utilisé pour l'étape de mise en contact, et qui de préférence est la cuve agitée de la revendication 6 ; ou dans lequel les filtres sont disposés dans un dispositif de filtration distinct dudit récipient, et de préférence connecté à celui-ci, le dispositif de filtration distinct étant de préférence choisi parmi les dispositifs de filtres presses rotatifs, de filtres rotatifs sous vide et de filtres à bandes.

8. Procédé selon l'une des revendications 1 à 7, dans lequel la résine échangeuse d'ions est sous forme de particules ayant une taille Dv50 inférieure ou égale à 150 µm, de préférence à 100 µm, de manière plus particulièrement préférée à 50 µm ;
et/ou dans lequel la dimension maximale du lit compact de résine chargée dans la direction selon laquelle la solution de régénération est faite passer est inférieure ou égale à 10 cm, de préférence inférieure ou égale à 5 cm, de manière plus particulièrement préférée inférieure ou égale à 2 cm.

9. Procédé selon l'une des revendications 1 à 8 dans lequel :
- la solution de régénération utilisée pour la régénération de la résine chargée est en partie issue d'une précédente régénération de résine chargée ; et/ou
- la solution de lavage utilisée pour le lavage de la résine chargée est en partie issue d'un précédent lavage de résine chargée, et/ou d'une précédente régénération de résine chargée ; et/ou
- la solution de rinçage utilisée pour le rinçage de la résine est en partie issue d'un précédent rinçage de résine.

10. Procédé selon l'une des revendications 1 à 9, qui est un procédé continu ; ou dans lequel une pluralité de lots de résine chargée issus de plusieurs étapes distinctes de mise en contact sont rassemblés en un lot unique de résine chargée pour la mise en œuvre de l'étape de régénération, et le cas échéant de l'étape précédente de lavage et/ou de l'étape suivante de rinçage.

11. Procédé selon l'une des revendications 1 à 10, dans lequel la fraction volumique occupée par les particules lors de l'étape de mise en contact avec la solution à purifier est inférieure ou égale à 0,3, de préférence à 0,2, ou à 0,1, ou à 0,05, ou à 0,01, ou à 0,005.

12. Procédé selon l'une des revendications 1 à 11, dans lequel la quantité totale de solution(s) de régénération utilisée est de 0,5 à 4 fois le volume de résine, plus particulièrement de 1 à 3 fois le volume de résine, de préférence 1 à 2 fois le volume de résine ; et/ou dans lequel la durée de la mise en contact de la résine avec la solution à purifier est de 1 minute à 6 heures, de préférence de 10 minutes à 2 heures.

13. Ensemble pour la purification d'une solution à purifier, comprenant :
- une résine échangeuse d'ions sous forme de particules ayant une taille Dv50 inférieure ou égale à 200 µm, la taille Dv50 étant déterminée par granulométrie par diffraction laser ;
- une installation de purification d'une solution à purifier, comprenant :
▪ un contenant (1, 1'), qui est une cuve agitée (1, 1'), pour la mise en suspension de la résine dans la solution à purifier ;
▪ un dispositif de séparation (4, 6') pour séparer une solution purifiée d'une part et une résine chargée d'autre part ;
l'installation étant configurée pour régénérer la résine chargée en faisant passer au moins une solution de régénération à travers un lit compact de résine chargée.

14. Ensemble selon la revendication 13, dans lequel l'installation est en outre configurée pour rincer la résine après sa régénération, de préférence en faisant passer au moins une solution de rinçage à travers un lit compact de résine ; et/ou pour laver la résine avant sa régénération, de préférence en faisant passer au moins une solution de lavage à travers un lit compact de résine.

15. Ensemble selon l'une des revendications 13 à 14, dans lequel le dispositif de séparation (4, 6') est configuré pour former un lit compact de résine sur un ou plusieurs filtres (4, 9a', 9b') ; et, de préférence :
- les filtres (4) sont disposés en sortie du contenant (1, 1') ; ou
- les filtres (9a', 9b') sont disposés dans un dispositif de filtration (6') distinct du contenant (1, 1') et de préférence connecté à celui-ci, le dispositif de filtration (6') étant de préférence un dispositif de filtre presse rotatif, de filtre rotatif sous vide ou de filtre à bande.

## Patentansprüche

1. Verfahren zur Reinigung einer Lösung, das aufeinanderfolgend umfasst:
- das Inkontaktversetzen einer zu reinigenden Lösung mit einem lonenaustauscherharz durch Insuspensionversetzen des lonenaustauscherharzes in der zu reinigenden Lösung in einem Rührgefäß während einer Dauer, die notwendig ist, um einen gewünschten Grad der Entfärbung zu erhalten, wobei das lonenaustauscherharz in Form von Partikeln mit einer Größe Dv50 von unter oder gleich 200 µm vorliegt, wobei die Größe Dv50 durch Laserdiffraktionsgranulometrie bestimmt wird; und
- das Übertragen der gesamten Lösung und des Harzes in eine Filtrationsvorrichtung;
- das Trennen einer gereinigten Lösung zum einen und eines beladenen Harzes zum anderen, sobald die Mischung aus der Lösung und dem Harz in der Filtrationsvorrichtung sind;
- das Regenerieren des beladenen Harzes, indem mindestens eine Regenerationslösung durch ein kompaktes Bett beladenen Harzes geleitet wird, wobei das Verfahren ein Entfärbeverfahren ist und die zu reinigende Lösung ein Zuckersaft ist.

2. Verfahren nach Anspruch 1, **dadurch gekennzeichnet, dass** der Zuckersaft eine Färbung von über oder gleich 100 Einheiten ICUMSA, vorzugsweise 300 Einheiten ICUMSA, vorzugsweise 400 Einheiten ICUMSA und besonders bevorzugt 500 Einheiten ICUMSA aufweist.

3. Verfahren nach einem der Ansprüche 1 bis 2, umfassend ferner vor der Regeneration des beladenen Harzes:
- das Waschen des beladenen Harzes, vorzugsweise durch Hindurchleiten von mindestens einer Waschlösung durch ein kompaktes Bett beladenen Harzes;
und umfassend, bevorzugt, beim oder nach Abschluss des Waschens:
- das Trennen des beladenen Harzes und einer zusätzlichen verdünnten Fraktion gereinigter Lösung.

4. Verfahren nach einem der Ansprüche 1 bis 3, umfassend ferner:
- das Spülen des Harzes nach der Regeneration, vorzugsweise durch Hindurchleiten von mindestens einer Spüllösung durch ein kompaktes Harzbett.

5. Verfahren nach einem der Ansprüche 1 bis 4, umfassend ferner:
- das Ablösen des kompakten Harzbetts nach dem Waschen oder dem Regenerieren oder dem Spülen und vorzugsweise nach dem Spülen;
wobei das Ablösen optional von einem Strom zu reinigender Lösung durchgeführt wird.

6. Verfahren nach einem der Ansprüche 1 bis 5, wobei das Trennen der gereinigten Lösung, das Regenerieren des beladenen Harzes und optional das Waschen und/oder das Spülen des Harzes mit einem oder mehreren Filtern durchgeführt werden, wobei das Harz in Form eines kompakten Betts auf diesen Filtern zurückgehalten wird.

7. Verfahren nach Anspruch 6, wobei die Filter am Ausgang eines Behälters angeordnet sind, der für den Schritt des Inkontaktversetzens verwendet wird, und der vorzugsweise das Rührgefäß von Anspruch 6 ist; oder wobei die Filter in einer Filtrationsvorrichtung angeordnet sind, die sich vom dem Behälter unterscheidet, und vorzugsweise damit verbunden sind, wobei die unterschiedliche Filtrationsvorrichtung vorzugsweise aus den Drehfilterpressen-, den Vakuumdrehfilter- und den Bandfiltervorrichtungen ausgewählt ist.

8. Verfahren nach einem der Ansprüche 1 bis 7, wobei das lonenaustauscherharz in Form von Partikeln mit einer Größe Dv50 von unter oder gleich 150 µm, vorzugsweise 100 µm, besonders bevorzugt 50 µm vorliegt, und/oder wobei die maximale Abmessung des kompakten Betts beladenen Harzes in der Richtung, in der die Regenerationslösung hindurchgeleitet wird, kleiner oder gleich 10 cm, vorzugsweise kleiner oder gleich 5 cm, besonders bevorzugt kleiner oder gleich 2 cm ist.

9. Verfahren nach einem der Ansprüche 1 bis 8, wobei:
- die für die Regeneration des beladenen Harzes verwendete Regenerationslösung teilweise aus einer vorangehenden Regeneration beladenen Harzes hervorgegangen ist; und/oder
- die zum Waschen des beladenen Harzes verwendete Waschlösung teilweise aus einem vorangehenden Waschen beladenen Harzes und/oder einer vorangehenden Regeneration beladenen Harzes hervorgegangen ist; und/oder
- die zum Spülen des Harzes verwendete Spüllösung teilweise aus einem vorangehenden Spülen von Harz hervorgegangen ist.

10. Verfahren nach einem der Ansprüche 1 bis 9, das ein kontinuierliches Verfahren ist, oder bei dem eine Vielzahl von Chargen beladenen Harzes aus mehreren unterschiedlichen Schritten des Inkontaktversetzens in einer einzigen Charge beladenen Harzes zur Durchführung des Regenerationsschritts zusammengefasst werden, und gegebenenfalls des vorangehenden Waschschrittes und/oder des folgenden Spülschritts.

11. Verfahren nach einem der Ansprüche 1 bis 10, wobei die Volumenfraktion, die von den Partikeln beim Schritt des Inkontaktversetzens mit der zu reinigenden Lösung eingenommen wird, kleiner oder gleich 0,3, vorzugsweise 0,2 oder 0,1 oder 0,05 oder 0,01 oder 0,005 ist.

12. Verfahren nach einem der Ansprüche 1 bis 11, wobei die verwendete Gesamtmenge von Regenerationslösung(en) 0,5 bis 4 Mal das Harzvolumen, vor allem 1 bis 3 Mal das Harzvolumen, vorzugsweise 1 bis 2 Mal das Harzvolumen ist; und/oder wobei die Dauer des Inkontaktversetzens des Harzes mit der zu reinigenden Lösung 1 Minute bis 6 Stunden, vorzugsweise 10 Minuten bis 2 Stunden beträgt.

13. Anordnung für die Reinigung einer zu reinigenden Lösung, umfassend:
- ein lonenaustauscherharz in Form von Partikeln mit einer Größe Dv50 von unter oder gleich 200 µm, wobei die Größe Dv50 durch Laserdiffraktionsgranulometrie bestimmt wird;
- eine Reinigungsanlage einer zu reinigenden Lösung, umfassend:
▪ ein Behältnis (1, 1'), das ein Rührgefäß ist (1, 1'), zum Insuspensionversetzen des Harzes in der zu reinigenden Lösung;
▪ eine Trennvorrichtung (4, 6') zum Trennen einer gereinigten Lösung zum einen und eines beladenen Harzes zum anderen;
wobei die Anlage ausgelegt ist, um das geladene Harz durch Hindurchleiten von mindestens einer Regenerationslösung durch ein kompaktes Bett beladenen Harzes zu regenerieren.

14. Anordnung nach Anspruch 13, wobei die Anlage ferner ausgelegt ist, um das Harz nach seiner Regeneration zu spülen, vorzugsweise durch Hindurchleiten von mindestens einer Spüllösung durch ein kompaktes Harzbett; und/oder um das Harz vor seiner Regeneration zu waschen, vorzugsweise durch Hindurchleiten von mindestens einer Waschlösung durch ein kompaktes Harzbett.

15. Anordnung nach einem der Ansprüche 13 bis 14, wobei die Trennvorrichtung (4, 6') ausgelegt ist, um ein kompaktes Harzbett auf einem oder mehreren Filtern (4, 9a', 9b') zu bilden; und vorzugsweise:
- die Filter (4) am Ausgang des Behältnisses (1, 1') angeordnet sind; oder
- die Filter (9a', 9b') in einer Filtrationsvorrichtung (6') angeordnet sind, die sich von dem Behältnis (1, 1') unterscheidet und vorzugsweise damit verbunden ist, wobei die Filtrationsvorrichtung (6') vorzugsweise eine Drehfilterpressen-, Vakuumdrehfilter- oder Bandfiltervorrichtung ist.

## Claims

1. A method for purifying a solution, successively comprising:
- contacting a solution to be purified with an ion exchange resin, by putting the ion exchange resin in suspension in the solution to be purified, in an agitated vessel, during a time needed to obtain a desired level of decolourization, the ion exchange resin being in the form of particles having a Dv50 size equal to or less than 200 µm, the Dv50 size being determined by laser diffraction analysis and ;
- transferring all the solution and the resin in a filtering device;
- separating a purified solution on the one hand and a loaded resin on the other hand once the mixture of solution and resin are in the filtering device;
- regenerating the loaded resin, by passing at least one regenerating solution through a compact bed of loaded resin,
the method being a decolourization method, and the solution to be purified being a sugar liquor.

2. The method according to claim 1, **characterized in that** the sugar liquor has a colouring equal to or higher than 100 ICUMSA units, preferably 300 ICUMSA units, preferably 400 ICUMSA units, and particularly preferred 500 ICUMSA units.

3. The method according to claims 1 or 2, further comprising, before regeneration of the loaded resin:
- washing the loaded resin, preferably by passing at least one washing solution through a compact bed of loaded resin; and preferably comprising, at the time of or after washing:
- separating the loaded resin and an additional dilute fraction of purified solution.

4. The method according to any one of claims 1 to 3, further comprising:
- rinsing the resin after regeneration, preferably by passing at least one rinsing solution through a compact bed of resin.

5. The method according to one of claims 1 to 4, further comprising:
- removing filter cake from the compact bed of resin after washing, or regeneration or rinsing, and preferably after rinsing;
the filter cake removal optionally being performed by a flow of solution to be purified.

6. The method according to one of claims 1 to 5, wherein the separation of the purified solution, the regeneration of the loaded resin, and optionally washing and/or rinsing of the resin, are performed by means of one or more filters, the resin being retained in the form of a compact bed on these filters.

7. The method according to claim 6, wherein the filters are arranged at the outlet of a container used for the contacting step, which is preferably the agitated vessel in claim 6; or wherein the filters are arranged in a filtering device separate from said vessel and preferably connected thereto, the separate filtering device preferably being selected from rotary press filters, rotary vacuum filters and belt filters.

8. The method according to one of claims 1 to 7, wherein the ion exchange resin is in the form of particles having a Dv50 size equal to or less than 150 µm, preferably 100 µm, more particularly preferred 50 µm and/or wherein the maximum size of the compact bed of loaded resin in the direction in which the regenerating solution is passed is equal to or less than 10 cm, preferably equal to or less than 5 cm, more particularly preferred equal to or less than 2 cm.

9. The method according to one of claims 1 to 8, wherein:
- the regenerating solution used to regenerate the loaded resin is partly derived from a preceding regeneration of loaded resin; and/or
- the washing solution used to wash the loaded resin is partly derived from a preceding washing of loaded resin, and/or from a preceding regeneration of loaded resin; and/or
- the rinsing solution used to rinse the resin is partly derived from a preceding rinsing of resin.

10. The method according to one of claims 1 to 9, which is a continuous method; or wherein a plurality of batches of loaded resin derived from several separate contacting steps are grouped together in a single batch of loaded resin for the implementation of the regeneration step, and optionally the preceding wash step and/or the following rinse step.

11. The method according to one of claims 1 to 10, wherein the volume fraction occupied by the particles during the contacting step with the solution to be purified is equal to or less than 0.3, preferably 0.2, or 0.1, or 0.05, or 0.01, or 0.005.

12. The method according to one of claims 1 to 11, wherein the total amount of regenerating solution(s) used is from 0.5 to 4 times the volume of resin, more particularly from 1 to 3 times the volume of resin, preferably from 1 to 2 times the volume of resin and/or wherein the duration of contacting the resin with the solution to be purified is from 1 minute to 6 hours, preferably from 10 minutes to 2 hours.

13. Assembly for the purification of a solution to be purified, comprising:
- an ion exchange resin in the form of particles having a Dv50 size equal to or less than 200 µm, the Dv50 size being determined by laser diffraction analysis;
- an installation for purifying a solution to be purified, comprising:
▪ a container (1, 1') which is an agitated vessel to put the resin in suspension in the solution to be purified;
▪ a separation device (4, 6') to separate a purified solution on the one hand and a loaded resin on the other hand;
the installation being configured to regenerate the loaded resin by passing at least one regenerating solution through a compact bed of loaded resin.

14. The assembly according to claim 13, wherein the installation is also configured to rinse the resin after regeneration thereof, preferably by passing at least one rinsing solution through a compact bed of resin; and/or to wash the resin before regeneration thereof, preferably by passing at least one washing solution through a compact bed of resin.

15. The assembly according to one of claims 13 to 14, wherein the separation device (4, 6') is configured to form a compact bed of resin on one or more filters (4, 9a', 9b'); and preferably:
- the filters (4) are arranged at the outlet of the container (1, 1'); or
- the filters (9a', 9b') are arranged in a filtering device (6') separate from the container (1, 1') and preferably connected thereto, the filtering device (6') preferably being a rotary press filter, rotary vacuum filter or belt filter.
